# EUROPEAN PATENT APPLICATION

(11) **EP 2 711 236 A2**
(43) Date of publication of application: **26.03.2014**
(21) Application number: 13185718.7
(22) Date of filing: 24.09.2013
(51) Int. Cl.: B60L 11/18, B60L 3/00

(54) **Fault detection system and method**

(30) Priority: 25.09.2012 GB 201217038
(71) Applicant: Nissan Motor Manufacturing (UK) Ltd., Cranfield Bedfordshire MK43 0DB (GB)
(72) Inventor: Keenan, Patrick, Cranfield, Bedfordshire MK430DB (GB)

(57) **Abstract**

A fault detection system 1 and method for detecting a fault associated with charging an electric vehicle 2 from a mains electricity supply 3 is described. The fault detection system 1 comprises a portable fault detector 4 adapted for connection to the mains electricity supply 3 which is to be connected to a power inlet 20 of the electric vehicle, the fault detector 4 being arranged to detect the occurrence of a fault, and in response issue a notification of the detected fault.

## Description

### Field of the invention

The invention relates to a fault detection method and system. In particular, the present invention relates to a fault detection method and system for detecting a fault associated with charging an electric vehicle from a mains electricity supply.

### Background to the invention

Electric vehicles such as the Nissan LEAF™ may be recharged at dedicated and specifically-designed electric vehicle charging stations. Such charging stations typically support a direct-current supply and permit faster charging at higher voltages and currents than normally possible from standard domestic supplies. Furthermore, such charging stations are specifically designed to minimise the chance of electrical faults and hazards.

However, charging stations are expensive, and are not widespread. Thus, to minimise the chance that an electric vehicle is out of the range of a convenient charging point, some electric vehicles have the capability to recharge via connection to a standard domestic electricity supply - also known as mains electricity, or mains power. Mains electricity is generally supplied as a single-phase, alternating current with a frequency between 50 to 60 Hz although three-phase supplies are also possible. As is well known, the voltage of mains electricity varies from country to country, but is usually within the range of 100-240V.

Charging an electric vehicle from mains power has many issues and challenges, particularly in the areas of charge-time and user safety.

Connection of an electric vehicle to the mains is usually via a standard electrical socket, which has a separate conductor for the live, neutral and earth terminals. The socket is typically one of many electrical sockets connected to a ring-main of a domestic property. Thus, the power transmitted via the ring-main depends on whether other appliances are connected to the same ring-main as that used the charge the electric vehicle. If the overall power load is too high, then it is commonplace to have a circuit breaker that trips, killing the power.

Whilst this is a fail-safe arrangement, it can be highly inconvenient for a user to discover that their electric vehicle has not charged due to a potentially transient fault on the electrical circuit - for example, another appliance temporarily drawing power from the same ring-main. As will be appreciated, such a fault may not necessarily occur when connecting the vehicle, but a period after the user has left the vicinity of the vehicle. Furthermore, it is highly likely that the user will discover that the vehicle has not properly charged only after the user has returned to use the vehicle again. This is highly inconvenient.

In view of this, the electric vehicle may have an onboard charge-handling system that may limit the power drawn when charging the electric vehicle from a mains supply in an attempt to minimise the chance of the circuit breaker tripping. Naturally, this increases the overall time to charge the electric vehicle, and does not necessarily prevent the circuit breaker tripping if the load on the ring-main happens to exceed the rating of the circuit breaker.

The on-board charge-handling system may also incorporate other capabilities. Also, as is known in the art, certain electric vehicle, such as the Nissan LEAF™, incorporate a vehicle telematics system (e.g. CARWINGS™) which are interfaced with the charge-handling system allowing a user to remotely monitor and control certain parameters of the charge-handling system, such as the charging status.

Similarly, it is possible to charge an electric vehicle via Electric Vehicle Supply Equipment (EVSE), also known as SAE International standard J1772. Some of the capabilities of an on-board charge-handling system may be present in the EVSE.

An EVSE is the device and related circuitry that safely provides the power connection between an electrical supply and an electrical vehicle's onboard charge-handling system, drawing power from the electric grid. The electrical supply may be a typical residential ring main.

Electric Vehicle Supply Equipment (EVSE) may generally refer to any of the off-board equipment used to supply charge energy to the vehicle, and for example may include the vehicle charge cord, fixed charge stands (public or residential), attachment plugs, power outlets, vehicle connector, and other infrastructure.

EVSEs come in different power levels. For example, the low power recharge cord provided with most new electric vehicles is known as a "Level 1" EVSE. It enables a vehicle to be plugged directly into a standard wall socket (e.g. 110V or 230V, etc) and recharge the vehicle. Charging with this low power option typically takes 6-8 hours for a hybrid electric vehicle and 12-18 hours for a full (non-hybrid) battery electric vehicle.

Level 2 EVSE have a dedicated charge station operating from a 240V circuit fitted to residential or other premises.

For level 1 and 2 charging using EVSE protocol the charge plug is not powered until plugged into and commanded by vehicle. A standardized connector mated to the vehicle port sends a signal from the onboard battery charger to the EVSE, and controls electricity consumption.

EVSE includes a signalling protocol that provides safety and control methods to be implemented. For example, the vehicle can detect plugs via a proximity circuit to prevent the vehicle driving away while connected.

A typical process for charging an EV includes the supply equipment detecting electric vehicle, whereupon the supply equipment will indicate to the EV readiness to supply energy.

The supply equipment signals its current capacity to the EV, and the EV issues a command to the supply to the begin energy flow.

The EV and supply equipment continuously monitor continuity of safety ground charge continues as determined by the EV. During this time, charging may be interrupted by disconnecting the plug from the vehicle. However, the safety protocols associated with EVSE do not protect against some fault situations. This also applies to the on-board charge-handling system of an EV.

Specifically, such devices are only able to detect and handle a fault after the electric vehicle is connected to the mains supply. Furthermore, mains electricity supplies may be prone to certain faults and hazards which are particularly exacerbated when using those supplies for charging an electric vehicle, and may not necessarily be detected by the on-board charge-handling system.

One specific, but potentially fatal problem relates to a fault condition known as "broken neutral". A common way of supplying mains electricity to a domestic property is to use TNC-S wiring convention which combines the neutral wire with the protective earth wire between the domestic property and the substation transformer. Once the supply cable has entered the domestic property, the protective earth wire and neutral wire are separated, with the neutral wire being connected to the neutral busbar of a consumer unit, and the earth wire being connected to an earth rod. In the event that the neutral wire of the supply cable is broken between the domestic property and the substation transformer, and the neutral wire and the live wire within the domestic property are connected, for example via an electrical load, then the earth wire can gain a hazardous electrical potential above true earth. Under such a fault condition, a person bridging the earth wire and true earth can receive an electrical shock.

To minimise the hazardous consequence of this fault condition, domestic properties are electrically bonded to form an equipotential zone within the property. That is, all exposed conductive surfaces within the property are connected together so that a person cannot touch two conductive objects with significantly different electric potentials. However, a problem arises when, during such a "broken neutral" fault condition, a mains extension cable is lead out from within the equipotential zone. Such a situation could quite readily occur when charging an electric vehicle parked outside the domestic property. Under these circumstances, the earth line of that extension cable, which may be then be connected to the conductive chassis of the car, could present a serious electrical shock hazard. This is especially the case if a person is well-connected to true earth, for example, by standing on wet ground and the vehicle chassis is not, for example, by virtue of the vehicle tyres electrically insulating the chassis from the ground.

It is against this background that the present invention has been devised.

### Summary of the Invention

According to a first aspect of the present invention, there is provided a fault detection system for detecting a fault associated with charging an electric vehicle from a mains electricity supply, the system comprising a portable fault detector adapted for connection to the mains electricity supply which is to be connected to a power inlet of the electric vehicle, the fault detector being arranged to detect the occurrence of a fault, and in response issue a notification of the detected fault.

The detected fault may be a broken neutral fault. An advantage of this arrangement is that the portable fault detector can detect the occurrence of a fault such as "broken neutral" prior to connection of the mains electricity to an electric vehicle. Furthermore, as the fault detector is portable, it can be connected directly into a domestic mains power outlet by the user. Thus, the user can be notified even before the user has left an equipotential zone.

The fault detector may include an integrated energy source. The energy source may be, for example a rechargeable battery. The battery may be recharged in use from a mains power source.

Furthermore, the portability of the fault detector provides the user with the flexibility to choose where the fault detector is located such that if the fault detector issues a notification in response to a detected fault, the notification can be communicated in the most effective manner. For example, if a mains extension cable is used to lead power from within a building to a vehicle located outside, then a user has the option of connecting the portable fault detector at either one end of the mains extension cable within the building, or at the other end of the extension cable outside the building and close to the electric vehicle. The user may even place the fault detector elsewhere on the ring main which will ultimately be connected to the vehicle.

The detected fault may be an interruption in the power supply. In this case, it can be particularly advantageous to notify the user of an interruption in the power supply, especially when the user may not necessarily be in the vicinity of the electric vehicle. The user can therefore take an action to recommence charging (for example, by resetting a circuit breaker), or formulate an appropriate contingency plan (e.g. return to the electric vehicle earlier than normal to connect it to another working electricity supply, modify travel plans etc). Accordingly, as the user can be more promptly informed of an interruption in the mains power supply, it is less inconvenient if a circuit breaker does trip. In view of this, the electric vehicle may be charged at a higher power rating in the knowledge that even if this increases the chance of the circuit breaker tripping, this is not as inconvenient as it would normally be. Optionally, the fault detector is arranged to issue a local notification of the detected fault. Preferably, the local notification may comprise at least one of an audible notification and a visual notification of the detected fault.

Advantageously, if a fault condition exists when a user connects the fault detector to the mains power supply, then the user will immediately and clearly be warned of the fault condition, as the audible and/or visual notifications of the fault are issued locally from the device. This also works synergistically with the previous advantage of being able to choose the location of the fault detector - i.e. the user can position the fault detector wherever it is likely to be seen and/or heard in the event of a fault condition occurring after charging has commenced.

Preferably, the fault detector comprises a communications module for transmitting information about the detected fault. Preferably, the communications module is arranged to transmit information about the detected fault to at least one receiving device remotely located from the fault detector. The at least one receiving device may comprise at least one fault-handling device, such as a charge-handling system of the electric vehicle.

Advantageously, a fault-handling device such as the charge-handling system of an electric vehicle can already perform a number of different fault-handling operations, of which one could be the electric isolation of the electric vehicle's power inlet. Thus, fault detection, which is performed by the fault detector, is separate from but in communication with fault handling, which is performed by the fault-handling device, such as the charge-handling system. Thus, the fault detector does not need to incorporate fault handling components or circuitry. Advantageously, this means that the fault detector can be less bulky and heavy, increasing its portability, and also the fault detector can be manufactured at a lower cost. Furthermore, it can be functionally advantageous to allow a dedicated fault-handling device such as the charge-handling system of the electric vehicle to retain control over fault handling. In particular, electric vehicles may already have the functionality allowing a user to monitor and control charging remotely. Thus, for transient faults, it may be possible for a user to control the electric vehicle remotely to enable/disable the isolation of the power inlet and interrupt/resume charging as appropriate. Again, to build the same functionality into the fault detector itself would reduce its portability and increase its cost.

The at least one receiving device may comprise a user mobile device. Advantageously, this ensures that the user is kept informed of fault conditions, and potentially act in response - even if the user is not in the vicinity of the electric vehicle.

Preferably, the communications module is arranged to transmit information about the detected fault via a telematics system of an electric vehicle. Advantageously, this can reduce the cost and complexity of the fault detector.

Preferably, the electric vehicle's telematics system comprises a short-range communication channel, compatible with hardware and protocols such as Bluetooth® or WiFi™. Preferably, the electric vehicle's telematics system comprises a long-range communication channel, such as a cellular communication channel arranged to communicate with a cellular communications network (e.g. a Public Land Mobile Network). It will be understood that many electric vehicle telematics systems already incorporate both short-range and long-range communication channels. Thus, there is no need to replicate the same costly long-range systems within the fault detector. That is, the fault detector only needs to have the capability to communicate with the electric vehicle's telematics system, via relatively inexpensive short-range communication hardware or protocols. The electric vehicle telematics system merely has to be configured to relay information from the fault detector to other receiving devices, such as a user mobile device. However, in alternatives, the communications module may be arranged to transmit information about the detected fault via a cellular communications network.

The communications module may be arranged to transmit said information about the detected fault to the at least one receiving device via at least one wireless communication channel. Advantageously, a wire or cable (which may be carrying a fault or hazard itself) is not required for communication of the fault. Thus, a fault can be communicated before a physical and potentially hazardous connection between the mains electricity supply and the electric vehicle. Where the receiving device is a fault-handling device, such as the electric vehicle's charge handling system, the fault-handling device can be activated pre-emptively even before a physical connection has been made to a fault or hazard-carrying wire.

The wireless communication channel may utilise Bluetooth® compatible and/or WiFi™ compatible communication protocols and hardware. The wireless communication channel may utilise a cellular communication system or service, for example GPRS and/or text messaging. The communications module may be arranged to transmit information about the detected fault via a cellular communications network.

It will be appreciated that use of a wireless communication channel works synergistically with the previous advantage of being able to choose the location of the fault detector. That is, a user can position the fault detector at a location where wireless communication is most effective. For example, if communication is required between the fault detector and the electric vehicle (e.g. via Bluetooth®), it can be desirable to situate the fault detector relatively close to the vehicle. Alternatively, if communication is required between the fault detector and a home WiFi™ network, it may be better to situate the fault detector indoors, close to the associated wireless router. This issue is particularly pronounced for relatively short-range wireless communication systems, such as those using Bluetooth®, WiFi™, or similar.

Preferably, the transmitted information about the detected fault identifies the type of the fault. Advantageously, this allows the different types of faults to be handled in different manners. The transmitted information about the detected fault may identify the type of the fault as being critical or non-critical. The information transmitted by the communications module may comprise a command to electrically isolate the electric vehicle from the mains electricity supply.

If the transmitted information identifies a fault as being a critical fault, a fault-handling device, such as the charge-handling system may be arranged to automatically electrically isolate the power inlet of the electric vehicle from the mains electricity supply. If the transmitted information identifies a fault as being a non-critical fault, the fault-handling device may follow a set of rules before initiating fault handling. The set of rules may include waiting a predetermined period, or registering the occurrence of a predetermined number of non-critical faults before taking an action such as activating a fault-handling device to electrically isolate the power inlet of the electric vehicle.

Preferably, the communications module is arranged to transmit status information. It can be advantageous for the fault detector to communicate status information, even if no fault is detected. For example, the status information can be transmitted to establish and maintain a reliable connection between the fault detector and the at least one receiving device. This can provide reassurance to a user that the fault detector is operating correctly. The status information may be used for the purposes of handshaking or pairing between the fault detector and at least one receiving device. Optionally, the communications module may be arranged to transmit status information periodically. Optionally, the communications module is arranged to receive a status information request, and in response issue status information. At least one of the receiving devices may be arranged to issue the status information request.

Optionally, the fault detector comprises an electrical interface enabling the fault detector to be removably connected between the mains electricity supply and the electric vehicle. The connection may be an in-line connection. The connection may be a plug-in connection.

It will be noted that the power inlet of an electric vehicle is almost certain to be incompatible with a plug or socket of a standard mains supply. Thus, it is typical for electric vehicles to be sold together with a proprietary power cable (sometimes referred to a EVSE cable) that acts as an electrical adapter between a standard mains power socket and the power inlet of the electric vehicle. One end of such a proprietary power cable typically has a vehicle-specific plug, and the other end has a standard mains plug. As different electric vehicles tend to have different proprietary plugs, it is preferable for the fault detector to be connectable to the end of the proprietary power cable having the standard mains plug, so as to maximise the compatibility of the fault detector with a variety of different electric vehicles. Thus, the electrical interface of the fault detector may comprise a plug specifically shaped and arranged to mate with a respective standard mains electricity socket. Furthermore, the electrical interface of the fault detector may comprise a socket specifically shaped and arranged to mate with a respective standard mains electricity plug. Preferably, the electrical interface of the fault detector comprises a plug and a socket each specifically shaped and arranged to mate with a respective standard mains electricity socket and plug. Advantageously, this further improves the ability of the fault detector to be retrofitted for use with a wide range of electric vehicles and corresponding charging arrangements.

However, it can also be useful for the electrical interface of the fault detector be connectable to the end of the proprietary power cable having the vehicle specific plug. Thus, the electrical interface of the fault detector may be arranged for connection directly to the power inlet of the vehicle. In other words, the electrical interface of the fault detector may comprise a plug specifically shaped to mate with the power inlet of the electric vehicle. With this arrangement, the proximity of the fault detector to the electric vehicle is guaranteed, ensuring the reliability of any short-range wireless communication between the fault detector and the systems of the electric vehicle. Furthermore, if the fault detector is configured to be compatible with a power inlet specific to an electric vehicle, then it is easier to ensure that any other functionality provided by the fault detector can be correctly tailored specifically for use with that electric vehicle. For example, the communications module of the fault detector can be configured for reliable or even enhanced operation with a specific brand or make of electric vehicle. This reduces the need to build in different communication protocols or hardware for different vehicles, and also reduces the time and complexity associated with ensuring that the fault detector is operating and communicating effectively with the electric vehicle.

Optionally, the fault detector comprises a temperature detector. The temperature detector may be arranged to detect and/or infer the temperature of a connector used to charge the electric vehicle. Preferably, if the temperature is detected to be above a predetermined temperature threshold, the fault detector is arranged to issue a burn hazard notification. The user can therefore be warned that there is a burn hazard associated with touching the connector, even if the electricity supply has been disconnected. Advantageously, if the electrical interface of the fault detector is arranged for connection directly to the power inlet of the vehicle, the temperature detector may comprise a temperature sensor for directly sensing the temperature of the connector.

It will be understood that the fault detection system may comprise one or more components that have been identified above as being compatible or otherwise interacting with the fault detector.

For example, the fault detection system may further comprise a fault-handling device. Ideally, the fault-handling device is configured to receive information from the fault detector about a fault detected by the fault detector, and in response control the charging of the electric vehicle. Thus, the present invention can be extended to a fault detection and handling system. Preferably, the fault-handling device is configured to receive information from the fault detector about a fault detected by the fault detector, and if the fault is identified as being critical, the fault-handling device is further arranged to electrically isolate the mains electricity supply from the power inlet of the electric vehicle. Ideally, the fault-handling device comprises a charge-handling system of the electric vehicle. The fault-handling device may comprise a circuit-breaker.

As a further example, the fault detection system may further comprise a telematics system of the electric vehicle, the telematics system being configured to receive information from the fault detector about a fault detected by the fault detector, and relay that information to at least one receiving device located remotely from the fault detector. The at least one receiving device may comprise a fault-handling device and/or a user mobile device.

The fault detection system may further comprise a user mobile device, the user mobile device being configured to receive information about a fault detected by the fault detector, and in response notify a user. The user mobile device may be further arranged to receive a user input and in response transmit a fault-handling command to a fault-handling device, such as the charge-handling system of the electric vehicle.

Furthermore, the fault detection system may comprise one or more communication systems allowing the various components of the fault detection system to communicate with one another. The communication systems may include cellular, WiFi™, Bluetooth®, RF and/or other wireless or wired telecommunication hardware or protocols.

According to a further aspect of the present invention, there is provided a fault detection method for detecting a fault associated with charging an electric vehicle from a mains electricity supply, the method comprising:
connecting a fault detector to the mains electricity supply which is to be connected to the electric vehicle; and
using the fault detector to detect the occurrence of a fault and issuing a notification in response.

Features of the different aspects of the invention may be combined or substituted where context allows.

### Brief description of the drawings

In order that the invention may be more readily understood, reference will now be made, by way of example, to the accompanying drawings, in which:
Figure 1 is a schematic view of a fault detection system according to a first embodiment of the present invention;
Figure 2 is a schematic side view of a fault detector of the fault detection system 1 of Figure 1; and
Figure 3 is a schematic side view of an alternative fault detector compatible with the fault detection system 1 of Figure 1.

### Detailed description of embodiments of the invention

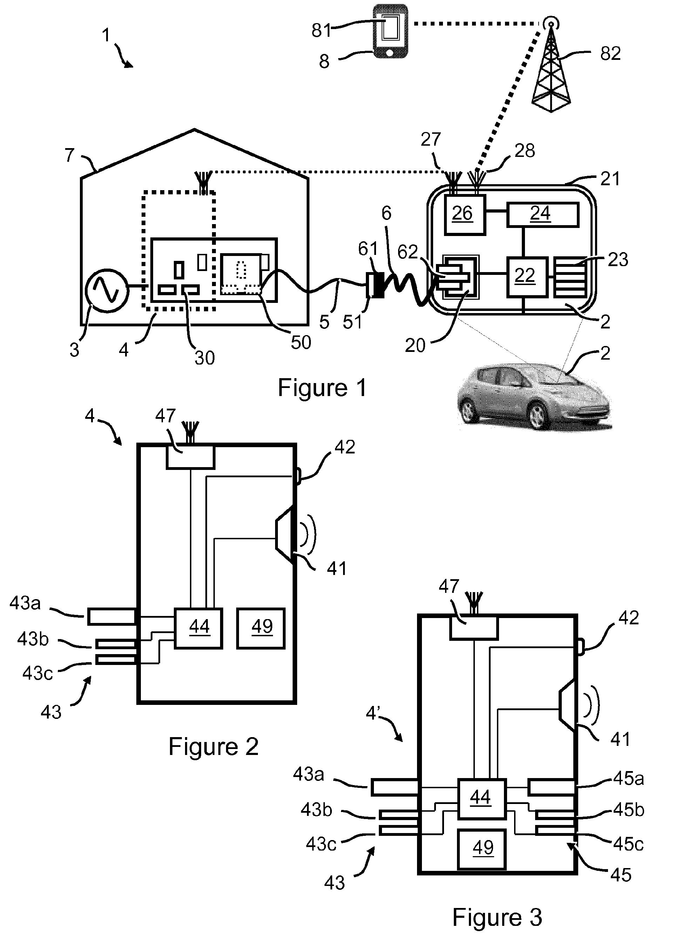

Figure 1 is a schematic view of a fault detection system 1 according to a first embodiment of the present invention. The fault detection system 1 comprises a portable fault detector 4, shown in Figure 1 as a rectangle with a dashed outline, which is operable to detect the occurrence of faults associated with charging an electric vehicle 2 from a mains electricity supply 3. Specifically, the fault detector 4 is arranged to detect the occurrence of a broken neutral fault.

The fault detection system 1 additionally comprises the electric vehicle 2 as well as a number of other known components, including a mains extension cable 5, an EVSE (Electric Vehicle Supply Equipment) cable 6 and a user's mobile device 8. These known components are specifically configured to operate together in an improved manner in conjunction with the fault detector 4 so that the fault detection system 1 as a whole can not only detect the occurrence of faults, but also handle faults, potentially mitigating any hazards associated with those faults.

Figure 1 shows the components of the fault detection system 1 interconnected by a user so as to enable charging of the electric vehicle 2. The portable fault detector 4 is connected to the standard mains electricity supply 3 of a building 7 via a standard mains socket 30. Moreover, the portable fault detector 4 is connected to the mains socket 30 adjacent to that which a plug end 50 of the mains extension cable 5 is connected. However, it will be appreciated that the portable fault detector 4 may be connected at any other power outlet of the mains electricity supply 3 of the building 7.

The other socket end 51 of the mains extension cable 5 is lead out of the building 7 and connected to a standard plug end 61 of the EVSE cable 6. The other end of the EVSE cable 6 comprises a proprietary vehicle-specific plug 62 which connects to a power inlet 20 of the electric vehicle 2.

To physically interconnect these components a user typically parks the electric vehicle 2 outside the building 7 and carries the portable fault detector 4 and mains extension cable 5 into the building 7, and so into the equipotential zone defined within the building 7. A user would then first plug in the fault detector 4 into the mains electricity supply 3, and then subsequently connect up the main extension cable 5 and then the EVSE cable 6. Accordingly, if there is a fault with the mains electricity supply 3, then this can be detected and the user notified prior to the connection of the mains electricity supply 3 to the electric vehicle 2, and even before the user has left the equipotential zone defined within the building 7. Even if the components were to be physically connected in reverse order, at the time that the fault detector 4 is connected by a user to the mains electricity supply 3, the user is safely within the equipotential zone within the building 7. Moreover, even if the fault detector were to be connected between the mains extension cable 5 and the EVSE cable 6, the user-chosen placement of the fault detector 4 ensures it is best placed to reliably communicate a notification of a fault.

The electric vehicle 2 comprises an on-board charge-handling system 22, a battery 23, a central controller 24, and a telematics system 26. The telematics system 26 is interfaced via the central controller to 24 the charge-handling system 22. The charge-handling system controls and regulates the electrical connection between the power inlet 20 and the other components of the vehicle 2, such as the battery 23 and a vehicle's ground terminal which is connected to the chassis 21 of the vehicle 2.

The telematics system 26 comprises a WiFi ™-compatible short-range communication system 27, and a long-range cellular communication system 28. The cellular communication system 28 is arranged to establish a two-way communication link via a cellular base tower 82 to the user's mobile device 8. The mobile device 8 is arranged to download a specific application - an "app" 81 - which, when executed, is arranged to process the data received from the telematics system 26 and present that data to a user via a touch-sensitive display screen of the mobile device 8. The mobile device 8, when executing the app 81, is also arranged to receive a user input via the touch-sensitive display screen, which generate commands to be transmitted back to the telematics system 26 of the electric vehicle 2 for subsequently controlling the charge-handling system 22. Accordingly, a user is able to remotely monitor and control parameters of the charge-handling system 22 via the mobile device 8. For example, the user is able to view the charging status of the electric vehicle 2 and issue a command to enable or disable the electric isolation of the power inlet 20 to interrupt or resume charging respectively. It will be noted that electric isolation of the power inlet 20 also includes the disconnection of an earth conductor of the power inlet 20 from the vehicle ground terminal, and so the chassis 21 of the electric vehicle 2.

Figure 2 is a schematic side view of the fault detector 4 of the fault detection system 1 of Figure 1. The fault detector 4 comprises a speaker 41, an LED 42, a standard mains plug 43, a power source 49, a wireless communications module 47 and a controller 44.

The power source 49 can be a battery, for example a rechargeable battery. The battery can be charged from the mains supply.

For the avoidance of doubt, in the present embodiment, the dimensions and other design features of a "standard" mains plug or socket are defined by the British Standard BS 1363, as prevalent in the UK. However, in alternatives to the present embodiment, a different set of standards may be adopted, such as the CEE 7 standard in continental Europe.

In any case, the plug 43 of the fault detector 4 has a three separate conductors - one for the earth terminal 43a, one for the live terminal 43b and one for the neutral terminal 43c.

The controller 44 measures the potential difference between each of the terminals. These values are compared with predetermined thresholds so that an action can be triggered if anomalous voltages are detected. In particular, to determine the occurrence of a "broken neutral" fault, the potential difference between the earth terminal and the live terminal is measured. Under normal conditions, the potential difference should be equivalent to the expected supply voltage - e.g. approximately 240V in the United Kingdom. If this potential difference is substantially less than the expected supply voltage, this is indicative of a critical earth fault such as a broken neutral fault.

On determining that such a fault exists, the controller 44 of the fault detector 4 takes action to issue a notification of the detected fault. Specifically, the controller 44 energises the speaker 41 to issue an audible siren, and also enables the LED 42 to flash, thereby issuing a visual indication of a fault condition. Furthermore, the controller 44 activates the communications module 47 to issue a notification of the detected fault via a WiFi™-compatible wireless communication channel, to the corresponding WiFi™-compatible short-range communication system 27 of the electric vehicle's telematics system 26.

To this end, the portable fault detector 4 may have a set-up mode of operation during which it is registered with the telematics system 26. This may involve an authentication process as is known in the art.

The connection between the communications module 47 of the portable fault detector 4 and the telematics system 26 of the electric vehicle 2 is a direct "point-to-point" connection. In alternatives, the connection may be via an intermediate device - for example, a wireless home router. However, in the present embodiment, a direct connection is preferred so that a user is not inconvenienced if a charging location does not have an intermediate device with which the communications module 47 or telematics system 26 is registered.

As mentioned, in response to a detected fault, the communications module 47 issues a notification of the fault to the telematics system 26 of the electric vehicle 2, including information identifying the type of the fault, such as whether the fault is critical or non-critical.

The telematics system 26 is interfaced via the central controller 24 to the charge-handling system 22 of the electric vehicle 2. On receipt of a critical fault notification at the telematics system 26, the central controller 24 issues a command to the charge-handling system 22 to automatically electrically isolate the power inlet 20 of the electric vehicle 2, including the disconnection of an earth conductor of the power inlet 20 from the vehicle ground terminal, and so from the chassis 21 of the electric vehicle 2. Thus, on receipt of a notification of a critical fault such as a broken neutral fault, the electric vehicle 2 is automatically and immediately isolated from the faulty electricity supply, protecting the user from the associated electrical hazard.

On receipt of a non-critical fault notification, the central controller 24 does not necessarily automatically and immediately action an electrical disconnection. Instead, the central controller 24 may be programmed to wait for a user input. Moreover, the central controller 24, via the charge-handling system 22 and/or telematics system 26 notifies a user of the fault, and only if no user response is received after a predetermined period and on registering the occurrence of a predetermined number of non-critical faults is the electrical disconnection automatically actioned.

When the electricity power supply is supplied normally, some of this power is drawn by the fault detector 4 to keep the power source 49 fully charged. Thus, in the event that the fault condition is an electricity power supply failure, for example as a result of the tripping of a circuit breaker, the power source 49 enables the fault detector to remain active in order to issue a notification of this fault also.

It should be noted that even if no fault is detected, the communications module 47 transmits status information so as to establish and maintain a reliable connection between the fault detector 4 and the electric vehicle 2. On establishing a reliable connection, the fault detector 4 is arranged to provide a user feedback, for example, via a steady illumination of the LED 42 to reassure a user that the fault detector is operating correctly, that it is reliably connected to the various systems of the electric vehicle 2, and no fault is detected. Similarly, a user interface on the dashboard of the electric vehicle 2 (not shown) may be configured by the central controller 24 to provide similar information and reassurance to a user of the correct operation of the fault detection system 1 as a whole. Such status information may also be used during a set-up mode of operation for the purposes of handshaking or pairing between the fault detector 4 and the telematics system 26 of the electric vehicle 2.

Thus, the telematics system 26 is arranged to receive from the fault detector 4 via its short-range communication system 27 notification of critical faults, non-critical faults, and also status information. As well as using this information to control the systems of the electric vehicle 2, the telematics system 26 is further arranged to relay the same information to the mobile device 8 of the user via its long-range cellular communication system 28. Accordingly, the user can be kept informed of the status of the fault detector 4, and if appropriate remotely control the charge-handling system 22 of the electric vehicle 2 to mitigate hazards associated with any fault condition. As the communications module 47 of the fault detector 4 is arranged to communicate with the mobile device 8 of the user via the electric vehicle's telematics system 26, this reduces the cost and complexity of the fault detector 4 as the fault detector 4 does not need to be provided with a relatively expensive cellular communication system.

However, in alternatives, the fault detector 4, can be fitted with a long range communication system, in particular, a communication system that can connect via the cellular base tower 82 to the mobile device 8 and/or the telematics system 26 of the electric vehicle 2, via the long-range cellular communication system 28. Such an alternative arrangement can be advantageous over that shown in Figure 1 as it does away with the need for the fault detector 4 and the electric vehicle's telematics system 26 to be endowed with a short-range communication system 27. Communication between the fault detector 4, the mobile device 8 and the electric vehicle 2 can take place wholly via a cellular communication system. In further alternatives, the mobile device 8, the telematics system 26 and the fault detector 4 may each be provided with one or more different communication means, and select the use of the appropriate means of communication depending on predetermined factors such as availability, bandwidth, communication cost and so forth.

Further alternatives to the present embodiment will also be apparent to those skilled in the art.

For example, Figure 3 is a schematic side view of an alternative fault detector 4' which is also compatible with the fault detection system 1 of Figure 1. This fault detector 4' is substantially the same as the first embodiment in that it also comprises a speaker 41, an LED 42, a standard mains plug 43, a wireless communications module 47, a power source 49 and a controller 44. However, this fault detector 4' also comprises a standard mains socket 45.

The plug 43 and socket 45 of the fault detector 4 define an electrical interface allowing the fault detector 4 to be plugged-in in-line between the standard mains electricity socket 30 and a standard mains electricity plug located at the plug end 50 of the mains extension cable 5.

The plug 43 of the fault detector 4' also has three separate conductors - one for the earth terminal 43a, one for the live terminal 43b and one for the neutral terminal 43c. However, these conductors are connected substantially unimpeded to corresponding earth 45a, live 45b and neutral 45c terminals on the socket 45 of the fault detector 4, although it should be noted that this fault detector 4' may draw a small amount of operating power from any power supply to which it is connected, and may use this power to keep the power source 49 charged.

This alternative arrangement allows the fault detector 4' to be connected in-line between the electrical power supply and the electric vehicle. Advantageously, this can ensure that the electricity supply to which the electric vehicle is connected is exactly the same as that as the fault detector 4', and not, for example, on a different ring main. Furthermore, as this is an inline connection, the controller 44 can also measure the current running through each of the terminals. Furthermore, this alternative fault detector 4' does not require an electrical socket additional to the one that the plug end 50 of the mains extension cable 5 is connected. This can be useful when there are a limited number of convenient electrical sockets within a building 7.

Other alternatives will also be apparent to those skilled in the art.

For example, the fault detector 4 may be arranged to warn a user of other hazards. One of the dangers associated with charging an electric vehicle 2 is the heat generated in the current-carrying conductors, especially around contact points between plug and socket connectors, where the cross-sectional area through which current flows may be at a minimum. Even if a user may never touch the conductors themselves, the heat can be transferred to a surrounding insulating material and thus poses a burn hazard. In view of this the fault detector 4 may comprise a temperature detector that can either directly sense, or indirectly infer the temperature of a connector used to charge the electric vehicle 2. The temperature detector may comprise a temperature sensor for directly sensing the temperature, or may simply incorporate a sub-routine executed by the controller 44 to derive an expected temperature from other variables such as current flow over time. If the temperature is detected to be above a predetermined temperature threshold, the fault detector is arranged to issue a burn hazard notification.

In further alternatives, the fault detector may have its electrical interface shaped and arranged for connection directly to the power inlet of the electric vehicle, rather than to a standard mains electricity connector. When incorporating a temperature sensor, this arrangement has the advantage of allowing a direct determination of the temperature of the power inlet - where a user is most likely to receive a burn. Furthermore, when configured for direct connection to the power inlet of the vehicle, the proximity of the fault detector to the electric vehicle is guaranteed. This can ensure the reliability of any short-range wireless communication between the fault detector and the electric vehicle as well as ensuring that any other functionality provided by the fault detector can be tailored specifically to that electric vehicle.

For example, the communication system can be chosen to be specific to the brand or make of the electric vehicle, reducing the need to build in different communication protocols or hardware for different vehicles, and also reducing the time and complexity associated with ensuring that the fault detector is operating and communicating effectively with the electric vehicle.

In further alternatives, the fault detector may not necessarily be wholly reliant on power from a power supply to which it is connected. Instead, it may have a integrated power source. Advantageously, this means that a fault on the power supply to which the fault detector is connected will not adversely affect its capability to detect and notify a user or a fault-handling device of a fault condition.

## Claims

1. A fault detection system (1) for detecting a fault associated with charging an electric vehicle (2) from a mains electricity supply, the system comprising a portable fault detector (4) adapted for connection to the mains electricity supply (3) which is to be connected to a power inlet (20) of the electric vehicle, the fault detector being arranged to detect the occurrence of a fault, and in response issue a notification of the detected fault,
**Characterised in that** the fault detector comprises a communications module (47) arranged to transmit information about the detected fault to at least one receiving device (3) remotely located from the fault detector, and the communications module (47) is arranged to transmit said information about the detected fault to the at least one receiving device via at least one wireless communication channel, and wherein the at least one receiving device comprises at least one fault-handling device (22).

2. A fault detection system according to claim 1, wherein the at least one fault-handling device (22) comprises a charge-handling system of the electric vehicle.

3. A fault detection system according to claim 1 or 2, wherein the detected fault is at least one of a broken neutral fault and an interruption in the power supply.

4. A fault detection system according to any preceding claim, wherein the fault detector (4) is arranged to issue a local notification of the detected fault.

5. A fault detection system according to any preceding claim, wherein the communications module (47) is arranged to transmit information about the detected fault via a telematics system (26) of an electric vehicle.

6. A fault detection system according to any preceding claim, wherein the communications module (47) is arranged to transmit information about the detected fault via a cellular communications network (28).

7. A fault detection system according to claim 18 or claim 19, wherein the fault-handling device comprises a charge-handling system of the electric vehicle (2).

8. A fault detection system according to any preceding claim, further comprising a telematics system (26) of the electric vehicle, the telematics system being configured to receive information from the fault detector about a fault detected by the fault detector, and relay that information to at least one receiving device located remotely from the fault detector.

9. A fault detection system according to claim 21, wherein the at least one receiving device comprises a fault-handling device.

10. A fault detection system according to claim 21 or claim 22, wherein the at least one receiving device comprises a user mobile device (8).

11. A fault detection system according to any preceding claim, further comprising a user mobile device (8), the user mobile device being configured to receive information about a fault detected by the fault detector (4), and in response notify a user.

12. A fault detection system according to any preceding claim, wherein the user mobile device (8) is further arranged to receive a user input and in response transmit a fault-handling command to a fault-handling device.

13. A fault detection system according to any preceding claim, wherein the fault-handling device comprises a charge-handling system (22) of the electric vehicle (2).

14. A fault detection system according to any preceding claim, wherein the fault detection module includes an integrated energy source (49).
